# EUROPÄISCHE PATENTSCHRIFT

(11) **EP 1 340 097 B1**
(45) Veröffentlichungstag und Bekanntmachung des Hinweises auf die Patenterteilung: **26.03.2008**
(21) Anmeldenummer: 01993370.4
(22) Anmeldetag: 10.10.2001
(51) Int. Cl.: G01S 13/28, H01Q 25/00, H01Q 3/26

(54) **RADAREINRICHTUNG UND VERFAHREN ZUM BETREIBEN EINER RADAREINRICHTUNG**
RADAR DEVICE AND METHOD FOR OPERATING A RADAR DEVICE
DISPOSITIF RADAR ET SON PROCEDE DE FONCTIONNEMENT

(30) Priorität: 11.11.2000 DE 10056002
(43) Veröffentlichungstag der Anmeldung: 03.09.2003
(73) Patentinhaber: ROBERT BOSCH GMBH, 70442 Stuttgart (DE)
(72) Erfinder: VOIGTLAENDER, Klaus, 73117 Wangen (DE); VILLINO, Guido, 71229 Leonberg (DE); PASSMANN, Christian, 31171 Nordstemmen (DE); MEIER, Thomas, 13591 Berlin (DE); SCHMID, Dirk, 75397 Simmozheim (DE)
(86) Internationale Anmeldenummer: PCT/DE2001/003883
(87) Internationale Veröffentlichungsnummer: WO 2002/039141

(56) Entgegenhaltungen:
- US-A- 3 916 417
- US-A- 5 351 053
- US-A- 5 424 748
- US-A- 6 031 485
- D R BILLETTER: "Multifunction Array Radar" 1989 , ARTECH HOUSE , BOSTON, US XP002192249 Seite 161; Abbildung 8.7C

## Beschreibung

Die Erfindung betrifft eine Radareinrichtung mit Mitteln zum Erzeugen eines Trägerfrequenzsignals, Mitteln zum Formen von Pulsen, Mitteln zum Erzeugen modulierter Radarpulse aus dem Trägerfrequenzsignal, Mitteln zum Aussenden modulierter Signale als Radarpulse, Mitteln zum Empfangen von Radarpulsen und Mitteln zum Verarbeiten der empfangenen Radarpulse. Die Erfindung betrifft ferner ein Verfahren zum Betreiben einer Radareinrichtung mit den Schritten: Erzeugen eines Trägerfrequenzsignals, Formen von Pulsen, Erzeugen modulierter Radarpulse aus dem Trägerfrequenzsignal, Aussenden der modulierten Signale als Radarpulse, Empfangen von Radarpulsen und Verarbeiten der empfangenen Radarpulse.

### Stand der Technik

Für Radareinrichtungen kennt man zahlreiche Anwendungen auf den verschiedensten Gebieten der Technik. Beispielsweise ist im Rahmen der Nahbereichssensorik in Kraftfahrzeugen der Einsatz von Radareinrichtungen möglich.

Bei Radareinrichtungen werden elektromagnetische Wellen von einer Sendeantenne abgestrahlt. Treffen diese elektromagnetischen Wellen auf ein Hindernis, so werden sie reflektiert und nach der Reflexion von einer anderen oder derselben Antenne wieder empfangen. Nachfolgend werden die empfangenen Signale einer Signalverarbeitung und Signalauswertung zugeführt.

Man ist bestrebt, möglichst viele Informationen über das Fahrzeugumfeld zu sammeln und auszuwerten. Derartige Informationen betreffen die Messung der Entfernung des Kraftfahrzeuges zu anderen Objekten, die Messung der Relativgeschwindigkeit zwischen dem Fahrzeug und anderen Objekten sowie eine Winkelmessung im Hinblick auf das zu detektierende Objekt. Diese Messaufgaben sollen, wenn möglich, mit möglichst geringem apparativen Aufwand gelöst werden, wobei man insbesondere bestrebt ist, möglichst viele Messaufgaben in einer einzigen Radareinrichtung zu realisieren.

Diese Bestrebungen sind insbesondere im Hinblick auf die Messung von Winkelinformation problematisch, da hier gemäß dem Stand der Technik auf der Grundlage von Messwerten mehrerer räumlich verteilter Sensoren eine Triangulation durchgeführt wird.

Mögliche Anwendungen für Radareinrichtungen betreffen die Unfallverhütung ("Precrash"), ACC Stop & Go ("Adaptive Cruise Control"), Parkhilfe, semiautonomes Einparken und die Detektion des toten Winkels ("Blind Spot Detection").

### Vorteile der Erfindung

Die Erfindung baut auf der gattungsgemäßen Radareinrichtung dadurch auf, dass die Mittel zum Empfangen der Radarpulse eine Anordnung mit mehreren Antennen aufweisen, dass die Mittel zum Verarbeiten der Radarpulse Mittel zum Teilen der Signalleistung auf mindestens zwei verschiedene Empfangszweige aufweisen und dass Mittel zum Erzeugen unterschiedlicher Richtcharakteristiken in den verschiedenen Empfangszweigen vorgesehen sind. Mit einer derartigen Radareinrichtung ist es beispielsweise möglich, gleichzeitig eine Precrash-Messung und ACC Stop & Go zu realisieren. Die Erzeugung unterschiedlicher Richtcharakteristiken ermöglicht es, in den verschiedenen Sendezweigen eine Optimierung im Hinblick auf die unterschiedlichen Anforderungen durchzuführen. Eine Precrash-Messung ist beispielsweise äußerst zeitkritisch durchzuführen, wobei eine Winkelinformation jedoch von untergeordneter Bedeutung ist. Im Gegensatz hierzu ist bei ACC Stop & Go eine Winkelauflösung im Allgemeinen erforderlich. Durch die Bereitstellung unterschiedlicher Richtcharakteristiken kann somit in dem Empfangszweig für Precrash auf eine Winkelinformation verzichtet werden, was eine äußerst zeitkritische Messung ermöglicht, während in dem Empfangszweig für ACC Stop & Go die Richtcharakteristik so gewählt wird, dass man eine Winkelinformation erhält.

Bevorzugt weisen die Mittel zum Aussenden von Radarpulsen eine breite Richtcharakteristik auf. Auf diese Weise wird der gesamte zu detektierende Winkelbereich abgedeckt.

Vorzugsweise erzeugen die Mittel zum Erzeugen unterschiedlicher Richtcharakteristiken in den verschiedenen Empfangszweigen in mindestens einem Empfangszweig eine schwenkbare Richtcharakteristik. Dieser Empfangszweig, in welchem die schwenkbare Richtcharakteristik erzeugt wird, kann somit für die Übermittlung der Winkelinformation verwendet werden. Somit besteht beispielsweise die Möglichkeit den Empfangszweig für ACC Stop & Go zu verwenden.

Es kann ebenfalls vorteilhaft sein, dass die Mittel zum Erzeugen unterschiedlicher Richtcharakteristiken in den verschiedenen Empfangszweigen in mindestens einem Empfangszweig eine breite Richtcharakteristik erzeugen. Für Anwendungen, bei welchen es nicht vorrangig auf eine Winkelinformation ankommt, ist eine breite Richtcharakteristik mitunter ausreichend. Der Empfangszweig mit der breiten Richtcharakteristik kann somit beispielsweise für Precrash verwendet werden.

Ebenfalls kann vorteilhaft sein, dass mindestens zwei verschiedene Sendezweige vorgesehen sind und dass Mittel zum Erzeugen unterschiedlicher Richtcharakteristiken in den verschiedenen Sendezweigen vorgesehen sind. Es ist somit möglich, auch senderseitig unterschiedliche Richtcharakteristiken zu realisieren und somit die vorteilhaften Wirkungen des Parallelbetriebs für unterschiedliche Anwendungen der Radareinrichtung zu unterstützen. Dies ist besonders in dem Zusammenhang vorteilhaft, wenn die Radareinrichtung zum Senden und Empfangen dieselben Antennen verwendet.

Bevorzugt weisen die Mittel zum Erzeugen unterschiedlicher Richtcharakteristiken eine Steuerung auf. Eine solche Steuerung erhält als Eingangssignale beispielsweise Signale aus den Empfangszweigen. Ferner kann sie für die amplitudenmäßige und phasenmäßige Gewichtung und somit für die Erzeugung der unterschiedlichen Richtcharakteristiken verantwortlich sein.

Vorzugsweise sind Mittel zum Erzeugen modulierter Signale aus dem Trägerfrequenzsignal vorgesehen, und es sind Mittel zum Mischen der verzögerten modulierten Signale mit Empfangssignalen vorgesehen. Die Radareinrichtung kann somit nach dem Korrelationsverfahren arbeiten. Durch die Korrelation kann beispielsweise auf der Grundlage der zeitlichen Verzögerung vom Aussenden bis zum Empfangen der Radarimpulse auf die Entfernung eines Zielobjektes geschlossen werden.

Es kann ebenfalls bevorzugt sein, dass die Mittel zum Aussenden der Radarpulse als einzelne Sendeantenne realisiert sind. Es ist also ausreichend, dass auf der Empfängerseite unterschiedliche Richtcharakteristiken durch eine Antennenanordnung erzeugt werden, während auf der Senderseite eine einzelne Sendeantenne vorgesehen ist.

Es kann aber auch nützlich sein, wenn die Mittel zum Aussenden der Radarimpulse eine Anordnung mit mehreren Antennen aufweisen. Diese Antennen können von der Antennenanordnung auf der Empfängerseite getrennt angeordnet sein, oder sie können mit der Antennenanordnung der Empfängerseite identisch sein. Man ist also im Hinblick auf die Auslegung von Sende- und Empfangsantennen im Rahmen der vorliegenden Erfindung äußerst flexibel.

Es kann auch vorteilhaft sein, dass Mittel zum Erzeugen einer hohen Pulswiederholfrequenz vorgesehen sind und dass Mittel zum Erzeugen einer niedrigen Pulswiederholfrequenz vorgesehen sind. Die unterschiedlichen Pulsraten können somit für unterschiedliche Anwendungen genutzt werden, wobei die unterschiedlichen Pulswiederholfrequenzen auf den verschiedenen Richtcharakteristiken eingesetzt werden.

Vorzugsweise teilen die Mittel zum Erzeugen einer niedrigen Pulswiederholfrequenz die hohe Pulswiederholfrequenz durch eine ganze Zahl. Hierdurch stehen in vorteilhafter Weise Pulswiederholfrequenzen zur Verfügung; welche ein ganzzahliges Verhältnis aufweisen. Ferner ist die Erzeugung der verschiedenen Pulswiederholfrequenzen auf diese Weise rationell.

Von besonderem Vorteil ist' es, wenn die Radarpulse mit der breiten Richtcharakteristik mit der hohen Pulswiederholfrequenz ausgesendet werden und wenn die Radarpulse mit der schwenkbaren Richtcharakteristik mit der niedrigen Pulswiederholfrequenz ausgesendet werden. Bei diesem Betrieb ist es beispielsweise möglich, die zeitkritische Messung auf der breiten Richtcharakteristik mit einer hohen Pulswiederholfrequenz auszuführen, während es für die schwenkbare Richtcharakteristik, die im Rahmen der vorliegenden Erfindung vorzugsweise weniger zeitkritisch ist, mit der niedrigeren Pulswiederholfrequenz zu arbeiten.

Ebenfalls kann es nützlich sein, wenn die Radarpulse mit der schwenkbaren Richtcharakteristik mit einer Pulswiederholfrequenz ausgesendet werden, welche durch einen PN-Code ("Pseudo-Noise") moduliert ist. Bei einer derartigen PN-Modulation wird entsprechend einem PN-Code entschieden, ob ein Puls gesendet wird oder nicht. Da dem Empfänger der PN-Code bekannt ist, kann durch Korrelation ein Zielobjekt detektiert werden.

Die Erfindung baut auf dem gattungsgemäßen Verfahren dadurch auf, dass die Radarpulse von einer Anordnung mit mehreren Antennen empfangen werden, dass die Signalleistung auf mindestens zwei verschiedene Empfangszweige geteilt wird und dass unterschiedliche Richtcharakteristiken in den verschiedenen Empfangszweigen erzeugt werden. Mit einem solchen Verfahren ist es beispielsweise möglich, gleichzeitig eine Precrash-Messung und ACC Stop & Go zu realisieren. Die Erzeugung unterschiedlicher Richtcharakteristiken ermöglicht es, in den verschiedenen Sendezweigen eine Optimierung im Hinblick auf die unterschiedlichen Anforderungen durchzuführen. Eine Precrash-Messung ist beispielsweise äußerst zeitkritisch durchzuführen, wobei eine Winkelinformation jedoch von untergeordneter Bedeutung ist. Im Gegensatz hierzu ist bei ACC Stop & Go eine Winkelauflösung im Allgemeinen erforderlich. Durch die Bereitstellung unterschiedlicher Richtcharakteristiken kann somit in dem Empfangszweig für Precrash auf eine Winkelinformation verzichtet werden, was eine äußerst zeitkritische Messung ermöglicht, während in dem Empfangszweig für ACC Stop & Go die Richtcharakteristik so gewählt wird, dass man eine Winkelinformation erhält.

Es kann vorteilhaft sein, wenn die Radarpulse mit einer breiten Richtcharakteristik ausgesendet werden. Auf diese Weise wird der gesamte zu detektierende Winkelbereich abgedeckt.

Vorzugsweise wird in mindestens einem Empfangszweig eine schwenkbare Richtcharakteristik erzeugt. Dieser Empfangszweig, in welchem die schwenkbare Richtcharakteristik erzeugt wird, kann somit für die Übermittlung der Winkelinformation verwendet werden. Somit besteht beispielsweise die Möglichkeit den Empfangszweig für ACC Stop & Go zu verwenden.

Es kann vorteilhaft sein, wenn in mindestens einem Empfangszweig eine breite Richtcharakteristik erzeugt wird. Für Anwendungen, bei welchen es nicht vorrangig auf eine Winkelinformation ankommt, ist eine breite Richtcharakteristik mitunter ausreichend. Der Empfangszweig mit der breiten Richtcharakteristik kann somit beispielsweise für Precrash verwendet werden.

Ebenfalls kann es nützlich sein, wenn in den verschiedenen Sendezweigen unterschiedliche Richtcharakteristiken erzeugt werden.. Es ist somit möglich, auch senderseitig unterschiedliche Richtcharakteristiken zu realisieren und somit die vorteilhaften Wirkungen des Parallelbetriebs für unterschiedliche Anwendungen der Radareinrichtung zu unterstützen. Dies ist besonders in dem Zusammenhang vorteilhaft, wenn die Radareinrichtung zum Senden und Empfangen dieselben Antennen verwendet.

Vorzugsweise werden die unterschiedlichen Richtcharakteristiken durch eine Steuerung erzeugt. Eine solche Steuerung erhält als Eingangssignale beispielsweise Signale aus den Empfangszweigen. Ferner kann sie für die amplitudenmäßige und phasenmäßige Gewichtung und somit für die Erzeugung der unterschiedlichen Richtcharakteristiken verantwortlich sein.

Es ist von besonderem Vorteil, wenn verzögerte modulierte Signale aus dem Trägerfrequenzsignal erzeugt werden und wenn die verzögerten modulierten Signale mit Empfangssignalen gemischt werden. Die Radareinrichtung kann somit nach dem Korrelationsverfahren arbeiten. Durch die Korrelation kann beispielsweise auf der Grundlage der zeitlichen Verzögerung vom Aussenden bis zum Empfangen der Radarimpulse auf die Entfernung eines Zielobjektes geschlossen werden.

Nützlicherweise werden die Radarpulse von einer einzelnen Sendeantenne ausgesendet. Es ist also ausreichend, dass auf der Empfängerseite unterschiedliche Richtcharakteristiken durch eine Antennenanordnung erzeugt werden, während auf der Senderseite eine einzelne Sendeantenne vorgesehen ist.

Von Vorteil kann ebenfalls sein, wenn die Radarpulse von einer Anordnung mit mehreren Antennen ausgesendet werden. Diese Antennen können von der Antennenanordnung auf der Empfängerseite getrennt angeordnet sein, oder sie können mit der Antennenanordnung der Empfängerseite identisch sein. Man ist also im Hinblick auf die Auslegung von Sende- und Empfangsantennen im Rahmen der vorliegenden Erfindung äußerst flexibel.

Weiterhin ist es im Rahmen der vorliegenden Erfindung besonders nützlich, wenn eine hohe Pulswiederholfrequenz erzeugt wird und wenn eine niedrige Pulswiederholfrequenz erzeugt wird. Die unterschiedlichen Pulsraten können somit für unterschiedliche Anwendungen genutzt werden, wobei die unterschiedlichen Pulswiederholfrequenzen auf den verschiedenen Richtcharakteristiken eingesetzt werden.

In diesem Zusammenhang ist es besonders von Vorteil, wenn die niedrige Pulswiederholfrequenz durch ganzzahlige Teilung der hohen Pulswiederholfrequenz erzeugt wird. Hierdurch stehen in vorteilhafter Weise Pulswiederholfrequenzen zur Verfügung, welche ein ganzzahliges Verhältnis aufweisen. Ferner ist die Erzeugung der verschiedenen Pulswiederholfrequenzen auf diese Weise rationell.

Vorzugsweise werden die Radarpulse mit der breiten Richtcharakteristik mit der hohen Pulswiederholfrequenz ausgesendet, und die Radarpulse mit der schwenkbaren Richtcharakteristik werden mit der niedrigen Pulswiederholfrequenz ausgesendet. Bei diesem Betrieb ist es beispielsweise möglich, die zeitkritische Messung auf der breiten Richtcharakteristik mit einer hohen Pulswiederholfrequenz auszuführen, während es für die schwenkbare Richtcharakteristik, die im Rahmen der vorliegenden Erfindung vorzugsweise weniger zeitkritisch ist, mit der niedrigeren Pulswiederholfrequenz zu arbeiten.

Bevorzugt werden die Radarpulse mit der schwenkbaren Richtcharakteristik mit einer Pulswiederholfrequenz ausgesendet, welche durch einen PN-Code ("Pseudo-Noise") moduliert ist. Bei einer derartigen PN-Modulation wird entsprechend einem PN-Code entschieden, ob ein Puls gesendet wird oder nicht. Da dem Empfänger der PN-Code bekannt ist, kann durch Korrelation ein Zielobjekt detektiert werden.

Der Erfindung liegt die überraschende Erkenntnis zugrunde, dass mehrere Sensoranwendungen mit unterschiedlichen Richtcharakteristiken in einem Sensor parallel realisiert werden können. Während des Betriebs kann eine flexible Anpassung der Richtcharakteristik an die jeweilige Applikation erfolgen. Die erfindungsgemäße Radareinrichtung kann eine Winkelauflösung zur Verfügung stellen, so dass hierdurch die Gesamtzahl der Sensoren in einem Kraftfahrzeug reduziert werden kann. Es kommt zu einem verbesserten Signal-Rausch-Verhältnis (S/N), da auf der Empfängerseite mit einer Mehrzahl von Antennen gearbeitet wird. Weiterhin kann das Signal-Rausch-Verhältnis dadurch erhöht werden, dass die mittlere Leistung durch Erhöhung der Pulswiederholfrequenz erhöht wird, wobei eine solche Erhöhung der Pulswiederholfrequenz je nach Anwendung möglich ist. Ein gleichzeitiges Erhöhen der Pulswiederholfrequenz und ein Absenken der zulassungsrelevanten Pulsspitzenleistung kann dann zu einem Beibehalten des Signal-Rausch-Verhältnisses führen, wobei allerdings gleichzeitig die elektromagnetische Verträglichkeit der Radareinrichtung erhöht wird. Eine Verbesserung der elektromagnetischen Verträglichkeit, das heißt der Fähigkeit einer elektrischen Einrichtung, in ihrer elektromagnetischen Umgebung zufriedenstellend zu funktionieren, ohne die Umgebung, zu der auch andere Einrichtungen gehören, unzulässig zu beeinflussen, hat Vorteile im Hinblick auf die Zulassung der Einrichtung vor Regulierungsbehörden. Von Vorteil kann ebenfalls noch sein, dass bei gemeinsamer Benutzung der Antennenanordnung als Sende- und Empfangsantenne der Sensor insgesamt verkleinert wird.

### Zeichnungen

Die Erfindung wird nun mit Bezug auf die begleitenden Zeichnungen anhand bevorzugter Ausführungsformen beispielhaft erläutert.

Dabei zeigt:
- Figur 1: eine schematische Darstellung einer ersten Ausführungsform einer erfindungsgemäßen Radareinrichtung und
- Figur 2: eine schematische Darstellung einer zweiten Ausführungsform einer erfindungsgemäßen Radareinrichtung.

### Beschreibung der bevorzugten Ausführungsbeispiele

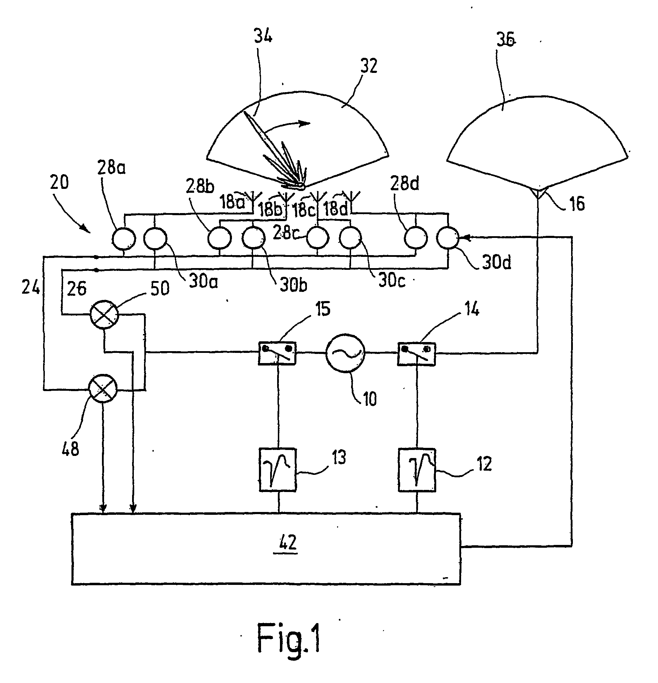

Figur 1 zeigt eine schematische Darstellung einer ersten Ausführungsform einer erfindungsgemäßen Radareinrichtung. Von einem Lokaloszillator 10 wird eine Trägerfrequenz erzeugt, zum Beispiel 24 GHz. Diese Trägerfrequenz wird in einem Sendezweig moduliert. Die Modulation erfolgt mittels einer Pulsformung 12, welche mit einer Steuerung 42 in Verbindung steht. Diese Pulsformung 12 betätigt die Modulationsmittel 14, so dass modulierte Radarpulse mit einer bestimmten Pulswiederholfrequenz zur Sendeantenne 16 gelangen. Die Sendeantenne 16 strahlt die Radarpulse mit einer breiten Richtcharakteristik 36 ab. Die Radarpulse werden nach einer Reflexion am Zielobjekt von einer Empfangseinrichtung empfangen. Es ist eine Vielzahl von Antennen 18a, 18b, 18c, 18d vorgesehen, welche die reflektierten Radarpulse empfangen. Durch die nachfolgende Schaltung im Empfangszweig gelingt es, dass die Antennen 18a, 18b, 18c, 18d mit unterschiedlichen Richtcharakteristiken arbeiten können. So kann beispielsweise eine breite Richtcharakteristik 32 zur Verfügung gestellt werden oder eine schmale Richtcharakteristik 34. Die schmale Richtcharakteristik 34 kann zudem schwenkbar sein. Die Verarbeitung der empfangenen Radarpulse erfolgt so, dass die Radarpulse zunächst auf einen 3 dB-Teiler geführt werden, so dass unterschiedliche Empfangszweige 24, 26 entstehen. Im ersten Empfangszweig sind Mittel 28a, 28b, 28c, 28d zum Modulieren der Phase und der Amplitude der empfangenen Radarimpulse vorgesehen. Im zweiten Empfangszweig 26 sind ebenfalls Mittel 30a, 30b, 30c, 30d zum Modulieren der Phase und der Amplitude der Radarpulse vorgesehen. Diese Mittel werden von der Steuerung 42 in der Weise beeinflusst, dass in den Empfangszweigen 24, 26 die jeweiligen Richtcharakteristiken entstehen. Die resultierenden Signale werden im ersten Empfangszweig 24 einem ersten Mischer 48 zugeführt. Im zweiten Empfangszweig 26 werden die resultierenden Signale einem zweiten Mischer 50 zugeführt. Beide Mischer 48, 50 erhalten modulierte Trägerfrequenzsignale, wobei die Modulation durch eine mit der Steuerung 42 verbundene Pulsformung 13 und Modulationsmittel 15 erfolgt. Auf diese Weise kommt es zu einer Korrelation, und schließlich kann in der Steuerung 42 die weitere Auswertung der Radarpulse erfolgen beziehungsweise veranlasst werden.

Die schwenkbare Richtcharakteristik 34 auf der Empfängerseite kann beispielsweise für einen Betrieb im Hinblick auf ACC Stop & Go verwendet werden. Durch das Schwenken der schmalen Richtcharakteristik 34 erhält man eine Winkelinformation im Hinblick auf die Zielobjekte. Da der ACC Stop & Go-Betrieb im Allgemeinen nicht sonderlich zeitkritisch ist, besteht ausreichend Zeit für ein Schwenken der Empfangskeule. Demgegenüber ist der Precrash-Betrieb äußerst zeitkritisch, so dass hier die breite Richtcharakteristik 32 auf der Empfangsseite genutzt wird.

Im vorliegenden Beispiel gemäß Figur 1 sind zwei Empfangszweige vorgesehen. Es ist ebenfalls möglich, mehr als zwei Empfangszweige zur Verfügung zu stellen, wobei ebenfalls mehr als zwei Richtcharakteristiken realisiert werden können. Die Richtcharakteristiken können daher je nach Anwendung optimiert werden.

Ferner ist zu bemerken, dass die Applikationen Precrash und ACC Stop & Go nur Anwendungsbeispiele sind, wobei diese typisch für eine zeitkritische beziehungsweise eine winkelkritische Anwendung sind. Die vorliegende Erfindung kann zum parallelen optimierten Betrieb anderer Anwendungen ebenfalls herangezogen werden.

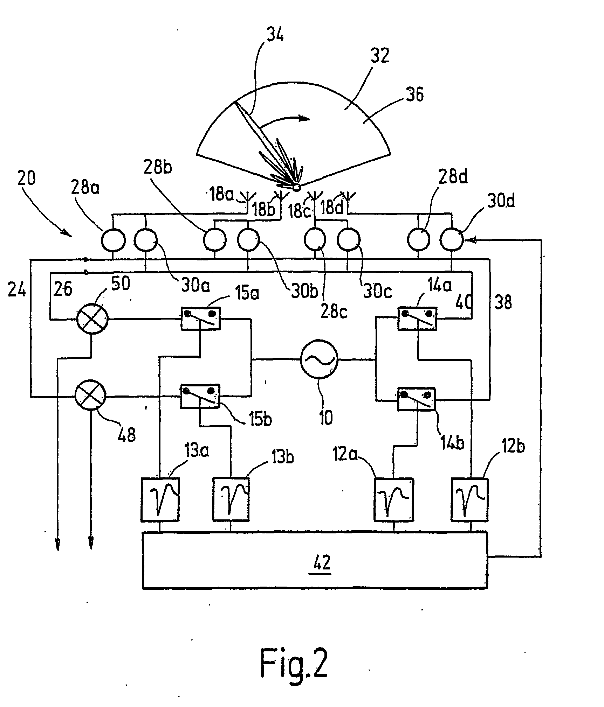

Figur 2 zeigt eine schematische Darstellung einer weiteren Ausführungsform einer erfindungsgemäßen Radareinrichtung. Elemente, welche denjenigen aus Figur 1 entsprechen, sind mit denselben Bezugszeichen gekennzeichnet. Bei der Ausführungsform gemäß Figur 2 wird die Antennenanordnung 18a, 18b, 18c, 18d sowohl für den Sende- als auch für den Empfangsbetrieb genutzt. Vorzugsweise werden unterschiedliche Pulswiederholfrequenzen auf den verschiedenen Richtcharakteristiken eingesetzt. Diese unterschiedlichen Pulswiederholfrequenzen werden durch das Zusammenspiel der Steuerung 42 mit den Pulsformungen 12a, 12b und den Modulationsmitteln 14a, 14b beziehungsweise durch das Zusammenspiel der Steuerung 32 mit den Pulsformungen 13a, 13b und den Modulationsmitteln 15a, 15b realisiert. Es sind zwei Sendezweige 38, 40 vorgesehen, wobei die unterschiedlichen Pulswiederholfrequenzen so gewählt werden, dass der Eindeutigkeitsbereich der Radareinrichtung nicht verletzt wird. Grundsätzlich ist der Eindeutigkeitsbereich einer Radareinrichtüng umgekehrt proportional zur Pulswiederholfrequenz. Liegt eine Pulswiederholfrequenz von beispielsweise 50 MHz vor, so ergibt sich ein Eindeutigkeitsbereich von 3 m. Dieser Eindeutigkeitsbereich kann ausreichen, um einen ausreichenden Precrash-Betrieb zur Verfügung zu stellen. Für einen Betrieb mit ACC Stop & Go ist der Eindeutigkeitsbereich von 3 m jedoch im Allgemeinen nicht ausreichend. Daher ist es möglich, im Rahmen der vorliegenden Erfindung, die breite Richtcharakteristik mit einer hohen Pulswiederholfrequenz von beispielsweise 50 MHz zu betreiben, während durch ganzzahlige Teilung der hohen Pulswiederholfrequenz eine weitere niedrigere Pulswiederholfrequenz erzeugt wird. Diese niedrige Pulswiederholfrequenz wird nun auf der schmalen schwenkbaren Richtcharakteristik 34 gesendet. Werden nun Empfangsimpulse mit der höheren Pulswiederholfrequenz, welche über die breite Richtcharakteristik gesendet wurden, am Ausgang der schmalen Richtcharakteristik empfangen, so können diese Fehler gleichwohl durch Vergleich beider Kanäle und über die unterschiedlichen Leistungspegel eliminiert werden. Durch Umschaltung der beiden Pulswiederholfrequenzen kann der Eindeutigkeitsbereich erhöht werden.

In diesem Zusammenhang ist noch eine weitere Möglichkeit der Modulation von Radarimpulsen besonders erwähnenswert. Diese besteht in der Aussendung von Radarpulsen, welche mit einem Pseudo-Noise-Code (PN-Code) mit einer hohen Pulswiederholfrequenz moduliert wurden, wobei diese PN-Modulation auf der schmalen Richtcharakteristik verwendet wird. Entsprechend dem PN-Code wird entweder ein Puls ausgesendet oder nicht. Da dem Empfänger die PN-Folge bekannt ist, kann durch Korrelation das Objekt detektiert werden.

Somit kann beispielsweise im Hinblick auf die beispielhaft genannten Applikationen Precrash und ACC Stop & Go das folgende Szenario entstehen. Für die zeitkritische Anwendung (Precrash), kann in einem Zeitintervall T1 der Entfernungsbereich R1 zum Beispiel zehnmal gescannt werden. Im selben Intervall T1 kann gleichzeitig eine weniger zeitkritische Applikation (ACC Stop & Go) einen größeren Entfernungsbereich R2 (R2 > R1) bei verschiedenen Schwenkwinkeln jeweils einmal abscannen.

## Patentansprüche

1. Kfz-Radareinrichtung mit
- Mitteln (10) zum Erzeugen eines Trägerfrequenzsignals,
- Mitteln (12, 12a, 12b, 13, 13a, 13b) zum Formen von Pulsen,
- Mitteln (14, 14a, 14b, 15, 15a, 15b) zum Erzeugen modulierter Radarpulse aus dem Trägerfrequenzsignal,
- Mitteln (16, 18a, 18b, 18c, 18d) zum Aussenden modulierter Signale als Radarpulse,
- Mitteln (18a, 18b, 18c, 18d) zum Empfangen von Radarpulsen und
- Mitteln (20) zum Verarbeiten der empfangenen Radarpulse,
- wobei die Mittel zum Empfangen der Radarpulse eine Anordnung mit mehreren Antennen (18a, 18b, 18c, 18d) aufweisen,
**dadurch gekennzeichnet,**
- **dass** die Mittel (20) zum Verarbeiten der Radarpulse Mittel zum Teilen der Signalleistung auf mindestens zwei verschiedene Empfangszweige (24, 26) aufweisen und
- **dass** Mittel (28a, 28b, 28c, 28d, 30a, 30b, 30c, 30d, 42) zum gleichzeitigen Erzeugen unterschiedlicher Richtcharakteristiken (32, 34) in den verschiedenen Empfangszweigen (24, 26) vorgesehen sind.

2. Radareinrichtung nach Anspruch 1, **dadurch gekennzeichnet, dass** die Mittel (16, 18a, 18b, 18c, 18d) zum Aussenden von Radarpulsen eine breite Richtcharakteristik (36) aufweisen.

3. Radareinrichtung nach Anspruch 1 oder 2, **dadurch gekennzeichnet, dass** die Mittel (28a, 28b, 28c, 28d, 30a, 30b, 30c, 30d, 42) zum Erzeugen unterschiedlicher Richtcharakteristiken (32, 34) in mindestens einem Empfangszweig eine schwenkbare Richtcharakteristik (34) erzeugen.

4. Radareinrichtung nach einem der vorangehenden Ansprüche, **dadurch gekennzeichnet, dass** die Mittel (28a, 28b, 28c, 28d, 30a, 30b, 30c, 30d, 42) zum Erzeugen unterschiedlicher Richtcharakteristiken in den verschiedenen Empfangszweigen (24, 26) in mindestens einem Empfangszweig (24, 26) eine breite Richtcharakteristik (32) erzeugen.

5. Radareinrichtung nach einem der vorangehenden Ansprüche, **dadurch gekennzeichnet,**
- **dass** mindestens zwei verschiedene Sendezweige (38, 40) vorgesehen sind und
- **dass** Mittel (28a, 28b, 28c, 28d, 30a, 30b, 30c, 30d, 42) zum Erzeugen unterschiedlicher Richtcharakteristiken (34, 36) in den verschiedenen Sendezweigen (38, 40) vorgesehen sind.

6. Radareinrichtung nach einem der vorangehenden Ansprüche, **dadurch gekennzeichnet, dass** die Mittel (28a, 28b, 28c, 28d, 30a, 30b, 30c, 30d, 42) zum Erzeugen unterschiedlicher Richtcharakteristiken eine Steuerung (42) aufweisen.

7. Radareinrichtung nach einem der vorangehenden Ansprüche, **dadurch gekennzeichnet,**
- **dass** Mittel (13, 13a, 13b, 15, 15a, 15b) zum Erzeugen modulierter Signale aus dem Trägerfrequenzsignal vorgesehen sind und
- **dass** Mittel (48, 50) zum Mischen der verzögerten modulierten Signale mit Empfangssignalen vorgesehen sind.

8. Radareinrichtung nach Anspruch 2, **dadurch gekennzeichnet, dass** die Mittel zum Aussenden der Radarpulse als einzelne Sendeantenne (16) realisiert sind.

9. Radareinrichtung nach einem der vorangehenden Ansprüche, **dadurch gekennzeichnet, dass** die Mittel zum Aussenden der Radarpulse eine Anordnung mit mehreren Antennen (18a, 18b, 18c, 18d) aufweisen.

10. Radareinrichtung nach einem der vorangehenden Ansprüche, **dadurch gekennzeichnet,**
- **dass** Mittel zum Erzeugen einer hohen Pulswiederholfrequenz vorgesehen sind und
- **dass** Mittel zum Erzeugen einer niedrigen Pulswiederholfrequenz vorgesehen sind.

11. Radareinrichtung nach Anspruch 10, **dadurch gekennzeichnet, dass** die Mittel zum Erzeugen einer niedrigen Pulswiederholfrequenz die hohe Pulswiederholfrequenz durch eine ganze Zahl teilen.

12. Verfahren zum Betreiben einer Kfz-Radareinrichtung mit den Schritten:
- Erzeugen eines Trägerfrequenzsignals,
- Formen von Pulsen,
- Erzeugen modulierter Radarpulse aus dem Trägerfrequenzsignal,
- Aussenden der modulierten Signale als Radarpulse,
- Empfangen von Radarpulsen und
- Verarbeiten der empfangenen Radarpulse,
- wobei die Radarpulse von einer Anordnung mit mehreren Antennen (18a, 18b, 18c, 18d) empfangen werden,
**dadurch gekennzeichnet,**
- **dass** die Signalleistung auf mindestens zwei verschiedene Empfangszweige (24, 26) geteilt wird und
- **dass** gleichzeitig unterschiedliche Richtcharakteristiken (32, 34) in den verschiedenen Empfangszweigen (24, 26) erzeugt werden.

13. Verfahren nach Anspruch 12, **dadurch gekennzeichnet, dass** die Radarpulse mit einer breiten Richtcharakteristik (36) ausgesendet werden.

14. Verfahren nach Anspruch 12 oder 13, **dadurch gekennzeichnet, dass** in mindestens einem Empfangszweig (24, 26) eine schwenkbare Richtcharakteristik (34) erzeugt wird.

15. Verfahren nach einem der Ansprüche 12 bis 14, **dadurch gekennzeichnet, dass** in mindestens einem Empfangszweig (24, 26) eine breite Richtcharakteristik (32) erzeugt wird.

16. Verfahren nach einem der Ansprüche 12 bis 15, **dadurch gekennzeichnet, dass** unterschiedliche Richtcharakteristiken in den verschiedenen Sendezweigen erzeugt werden.

17. Verfahren nach einem der Ansprüche 12 bis 16, **dadurch gekennzeichnet, dass** die unterschiedlichen Richtcharakteristiken durch eine Steuerung (42) erzeugt werden.

18. Verfahren nach einem der Ansprüche 12 bis 17, **dadurch gekennzeichnet,**
- **dass** verzögerte modulierte Signale aus dem Trägerfrequenzsignal erzeugt werden und
- **dass** die verzögerten modulierten Signale mit Empfangssignalen gemischt werden.

19. Verfahren nach Anspruch 13, **dadurch gekennzeichnet, dass** die Radarpulse von einer einzelnen Sendeantenne (16) ausgesendet werden.

20. Verfahren nach einem der Ansprüche 12 bis 19, **dadurch gekennzeichnet, dass** die Radarpulse von einer Anordnung mit mehreren Antennen (18a, 18b, 18c, 18d) ausgesendet werden.

21. Verfahren nach einem der Ansprüche 12 bis 20, **dadurch gekennzeichnet,**
- **dass** eine hohe Pulswiederholfrequenz erzeugt wird und
- **dass** eine niedrige Pulswiederholfrequenz erzeugt wird.

22. Verfahren nach Anspruch 21, **dadurch gekennzeichnet, dass** die niedrige Pulswiederholfrequenz durch ganzzahlige Teilung der hohen Pulswiederholfrequenz erzeugt wird.

## Claims

1. Motor vehicle radar device having
- means (10) for production of a carrier frequency signal,
- means (12, 12a, 12b, 13, 13a, 13b) for formation of pulses,
- means (14, 14a, 14b, 15, 15a, 15b) for production of modulated radar pulses from the carrier frequency signal,
- means (16, 18a, 18b, 18c, 18d) for transmission of modulated signals as radar pulses,
- means (18a, 18b, 18c, 18d) for reception of radar pulses, and
- means (20) for processing the received radar pulses,
- with the means for reception of the radar pulses having an arrangement with a plurality of antennas (18a, 18b, 18c, 18d)
**characterized**
- **in that** the means (20) for processing the radar pulses have means for splitting the signal power between at least two different reception paths (24, 26), and
- **in that** means (28a, 28b, 28c, 28d, 30a, 30b, 30c, 30d, 42) are provided for simultaneous production of different directional characteristics (32, 34) in the various reception paths (24, 26).

2. Radar device according to Claim 1, **characterized in that** the means (16, 18a, 18b, 18c, 18d) for transmission of radar pulses have a broad directional characteristic (36).

3. Radar device according to Claim 1 or 2, **characterized in that** the means (28a, 28b, 28c, 28d, 30a, 30b, 30c, 30d, 42) for production of different directional characteristics (32, 34) produce a directional characteristic (34) which can be scanned in at least one reception path.

4. Radar device according to one of the preceding claims, **characterized in that** the means (28a, 28b, 28c, 28d, 30a, 30b, 30c, 30d, 42) for production of different directional characteristics in the various reception paths (24, 26) produce a broad directional characteristic (32) in at least one reception path (24, 26).

5. Radar device according to one of the preceding claims, **characterized**
- **in that** at least two different transmission paths (38, 40) are provided, and
- **in that** means (28a, 28b, 28c, 28d, 30a, 30b, 30c, 30d, 42) are provided for production of different directional characteristics (34, 36) in the various transmission paths (38, 40).

6. Radar device according to one of the preceding claims, **characterized in that** the means (28a, 28b, 28c, 28d, 30a, 30b, 30c, 30d, 42) for production of different directional characteristics have a controller (42).

7. Radar device according to one of the preceding claims, **characterized**
- **in that** means (13, 13a, 13b, 15, 15a, 15b) are provided for production of modulated signals from the carrier frequency signal, and
- **in that** means (48, 50) are provided for mixing the delayed modulated signals with received signals.

8. Radar device according to Claim 2, **characterized in that** the means for transmission of the radar pulses are in the form of a single transmission antenna (16).

9. Radar device according to one of the preceding claims, **characterized in that** the means for transmission of the radar pulses have an arrangement with a plurality of antennas (18a, 18b, 18c, 18d).

10. Radar device according to one of the preceding claims, **characterized**
- **in that** means are provided for production of a high pulse repetition frequency, and
- **in that** means are provided for production of a low pulse repetition frequency.

11. Radar device according to Claim 10, **characterized in that** the means for production of a low pulse repetition frequency divide the high pulse repetition frequency by an integer.

12. Method for operation of a motor vehicle radar device having the following steps:
- production of a carrier frequency signal,
- formation of pulses,
- production of modulated radar pulses from the carrier frequency signal,
- transmission of the modulated signals and radar pulses,
- reception of radar pulses, and
- processing of the received radar pulses,
- with the radar pulses being received by an arrangement having a plurality of antennas (18a, 18b, 18c, 18d),
**characterized**
- **in that** the signal power is split between at least two different reception paths (24, 26), and
- **in that** different directional characteristics (32, 34) are produced at the same time in the various reception paths (24, 26).

13. Method according to Claim 12, **characterized in that** the radar pulses are transmitted with a broad directional characteristic (36).

14. Method according to Claim 12 or 13, **characterized in that** a directional characteristic (34) which can be scanned is produced in at least one reception path (24, 26).

15. Method according to one of Claims 12 to 14, **characterized in that** a broad directional characteristic (32) is produced in at least one reception path (24, 26).

16. Method according to one of Claims 12 to 15, **characterized in that** different directional characteristics are produced in the various transmission paths.

17. Method according to one of Claims 12 to 16, **characterized in that** the different directional characteristics are produced by a controller (42).

18. Method according to one of Claims 12 to 17, **characterized**
- **in that** delayed modulated signals are produced from the carrier frequency signal, and
- **in that** the delayed modulated signals are mixed with received signals.

19. Method according to Claim 13, **characterized in that** the radar pulses are transmitted from a single transmission antenna (16).

20. Method according to one of Claims 12 to 19, **characterized in that** the radar pulses are transmitted from an arrangement having a plurality of antennas (18a, 18b, 18c, 18d).

21. Method according to one of Claims 12 to 20, **characterized**
- **in that** a high pulse repetition frequency is produced, and
- **in that** a low pulse repetition frequency is produced.

22. Method according to Claim 21, **characterized in that** the low pulse repetition frequency is produced by dividing the high pulse repetition frequency by an integer.

## Revendications

1. Dispositif radar de véhicule automobile comprenant :
- des moyens (10) pour générer un signal de fréquence porteuse,
- des moyens (12, 12a, 12b, 13, 13a, 13b) pour former des impulsions,
- des moyens (14, 14a, 14b, 15, 15a, 15b) pour générer des impulsions radars modulées à partir du signal de fréquence porteuse,
- des moyens (16, 18a, 18b, 18c, 18d) pour émettre les signaux modulés comme impulsions radars,
- des moyens (18a, 18b, 18cn 18d) pour recevoir des impulsions radars et
- des moyens (20) pour traiter les impulsions radars reçues,
- les moyens de réception des impulsions radars ayant une disposition de plusieurs antennes (18a, 18b, 18c, 18d),
**caractérisé en ce que**
- les moyens (20) pour traiter les impulsions radars comprennent des moyens pour diviser la puissance du signal entre plusieurs branches de réception (24, 26),
- des moyens (28a, 28b, 28c, 28d, 30a, 30b, 30c, 30d, 42) sont prévus pour générer simultanément des caractéristiques directionnelles différentes (32, 34) dans les différentes branches de réception (24, 26).

2. Dispositif radar selon la revendication 1,
**caractérisé en ce que**
les moyens (16, 18a, 18b, 18c, 18d) ont une caractéristique directionnelle large (36) pour émettre des impulsions radars.

3. Dispositif radar selon les revendications 1 ou 2,
**caractérisé en ce que**
les moyens (28a, 28b, 28c, 28d, 30a, 30b, 30c, 30d, 42) pour générer différentes caractéristiques directionnelles (32, 34) dans au moins une branche de réception, génèrent une caractéristique directionnelle basculante (34).

4. Dispositif radar selon l'une des revendications précédentes,
**caractérisé en ce que**
les moyens (28a, 28b, 28c, 28d, 30a, 30b, 30c, 30d, 42) pour générer des caractéristiques directionnelles différentes dans les différentes branches de réception (24, 26) génèrent une caractéristique directionnelle large (32) dans au moins une branche de réception (24, 26).

5. Dispositif radar selon l'une des revendications précédentes,
**caractérisé par**
- au moins deux branches d'émission différentes (38, 40) et
- des moyens (28a, 28b, 28c, 28d, 30a, 30b, 30c, 30d, 42) pour générer des caractéristiques directionnelles différentes (34, 36) dans les différentes branches d'émission (38, 40).

6. Dispositif radar selon l'une des revendications précédentes,
**caractérisé en ce que**
les moyens (28a, 28b, 28c, 28d, 30a, 30b, 30c, 30d, 42), pour générer des caractéristiques directionnelles différentes, comportent une commande (42).

7. Dispositif radar selon l'une des revendications précédentes,
**caractérisé par**
- des moyens (13, 13a, 13b, 15, 15a, 15b) pour générer les signaux modulés à partir du signal de fréquence porteuse et
- des moyens (48, 50) pour mélanger les signaux modulés retardés avec les signaux de réception.

8. Dispositif radar selon la revendication 2,
**caractérisé en ce que**
les moyens d'émission des impulsions radars sont constitués par une seule antenne d'émission (16).

9. Dispositif radar selon l'une des revendications précédentes,
**caractérisé en ce que**
les moyens pour émettre les impulsions radars comportent une disposition formée de plusieurs antennes (18a, 18b, 18c, 18d).

10. Installation radar selon l'une des revendications précédentes,
**caractérisée par**
- des moyens pour générer une fréquence élevée de répétition des impulsions et
- des moyens pour générer une fréquence faible de répétition des impulsions.

11. Installation radar selon la revendication 10,
**caractérisée en ce que**
les moyens pour générer une fréquence faible de répétition des impulsions divisent la fréquence de répétition élevée des impulsions par un nombre entier.

12. Procédé de gestion d'un dispositif radar de véhicule automobile selon lequel
- on génère un signal de fréquence porteuse,
- on forme des impulsions,
- on génère des impulsions radars modulées à partir du signal de fréquence porteuse,
- on émet des signaux modulés comme impulsions radars,
- on reçoit des impulsions radars,
- on traite les impulsions radars reçues,
- les impulsions radars étant reçues par une disposition à plusieurs antennes (18a, 18b, 18c, 18d),
**caractérisé en ce qu'**
- on divise la puissance du signal entre au moins deux branches de réception (24, 26) différentes et
- on génère en même temps des caractéristiques directionnelles différentes (32, 34)dans les différentes branches de réception (24, 26).

13. Procédé selon la revendication 12,
**caractérisé en ce qu'**
on émet les impulsions radars avec une caractéristique directionnelle large (36).

14. Procédé selon les revendications 12 ou 13,
**caractérisé en ce qu'**
on génère une caractéristique directionnelle basculante (34) dans au moins une branche de réception (24, 26).

15. Procédé selon l'une des revendications 12 à 14,
**caractérisé en ce qu'**
on génère une caractéristique directionnelle large (32) dans au moins une branche de réception (24, 26).

16. Procédé selon l'une des revendications 12 à 15,
**caractérisé en ce qu'**
on génère des caractéristiques directionnelles différentes dans les différentes branches d'émission.

17. Procédé selon l'une des revendications 12 à 16,
**caractérisé en ce qu'**
on génère les caractéristiques directionnelles différentes par une commande (42).

18. Procédé selon l'une des revendications 12 à 17,
**caractérisé en ce que**
- on génère des signaux modulés retardés à partir du signal de fréquence porteuse et
- on mélange les signaux modulés retardés aux signaux de réception.

19. Procédé selon la revendication 13,
**caractérisé en ce qu'**
on émet les impulsions radars par une seule antenne d'émission (16).

20. Procédé selon les revendications 12 à 19,
**caractérisé en ce qu'**
on émet les impulsions radars par un dispositif à plusieurs antennes (18a, 18b, 18c, 18d).

21. Procédé selon les revendications 12 à 20,
**caractérisé en ce que**
- on génère une fréquence de répétition élevée des impulsions et
- on génère une fréquence de répétition faible des impulsions.

22. Procédé selon la revendication 21,
**caractérisé en ce qu'**
on génère la fréquence de répétition faible des impulsions par une division de la fréquence de répétition élevée des impulsions par un nombre entier.
